# EUROPEAN PATENT APPLICATION

(11) **EP 1 582 099 A1**
(43) Date of publication of application: **05.10.2005**
(21) Application number: 04076059.7
(22) Date of filing: 02.04.2004
(51) Int. Cl.: A23D 9/00, A21D 8/08

(54) **Pan release agent**

(71) Applicant: Bakery Technology Centre B.V., 4845 CR Wagenberg (NL)
(72) Inventor: De Levita, Paul David, 3972 EE Driebergen-Rijsenburg (NL); Van Duijnhoven, Antonius Adrianus Gerardus, 4845 CR Wagenberg (NL); Sturkenboom, Marcellus Gerardus, 3991 PX Houten (NL)
(74) Representative: Winckels, Johannes Hubertus F.

(57) **Abstract**

The present invention relates to a method for preparing an oil-based pan release agent concentrate in the form of a dispersion , comprising mixing a solid fatty substance with a liquid oil. The invention further relates to a pan release agent and to a method for baking a dough based product, such as bread or pastry, comprising adding the release agent to the dough and/or to the pan.

## Description

The invention relates to an oil-based pan release agent concentrate.

Release agents are used in the bakery industry to release the baked product from the pan it is baked in. Release agents may be oil based dispersions, water in oil emulsions or oil in water emulsions.

Besides oil, an oil based release agent may comprise various (non soluble) additives, *e.g.* starches to improve the release from the pan.

In order to stabilise such additives it has been proposed to include high melting fats in the release agent. Such a release agent is typically prepared by heating the oil to a temperature above the melting temperature of the high melting fat and adding the fat in an amount of up to 10 %. After dissolving the fat, the mixture is rapidly chilled to 3-5 °C such that the fat recrystallises. Thereafter the crystallised blend is typically matured for a while, after other powdered ingredients may be added.

Such preparation requires relatively complicated equipment and high amounts of energy (in particular for heating and for chilling). Further, during chilling, spots of condensed water, comprising nutrients, may form at parts of the equipment. Such spots may give rise to growth of microbes, which impart a health risk.

It is an object of the present invention to provide an alternative for known methods of preparing a pan release agent, in particular a method that is efficient with respect to its energy consumption and/or that may be employed using simple equipment.

It has now surprisingly been found that it is possible to provide a pan release agent concentrate comprising oil and fat, which concentrate may be used to prepare a fluid pan release agent without having to heat the ingredients to a temperature above the melting temperature of the fatty substance.

Accordingly, the present invention relates to a oil based pan release agent concentrate, comprising particles of a solid fatty substance, a liquid oil phase, and optionally particles of at least one additional food-grade component (hereafter also referred to as "additive"). In particular, the pan release agent concentrate is a composition with a high consistency - such as a solid - and/or has a weight ratio of the particles of the fatty substance to the oil phase of at least about 20:80.

The term "oil based" is used herein for a composition comprising a liquid phase which is formed by an oil. The term "oil" as used herein includes edible oil mimetic components, i.e. liquid components that have oil-like properties.

In particular the term "oil based" is used to describe a composition which is essentially free of an aqueous phase. Preferably, the term "oil based" is used to describe a composition which is essentially free of water, or at most comprises traces of water, *e.g.* in a weight percentage of less than 5 wt. %, based on the weight of the total composition, more preferably less than 1 wt.%, based on the weight of the total composition, even more preferably less than 0.5 wt. %, based on the weight of the total composition.

The term "solid" is used herein to describe a material that is not liquid and not gaseous at ambient room temperature (*e.g.* 25 °C), *i.e.* a substance that essentially remains its form (*i.e.* does not visibly flow) in the absence of externally applied forces. The solid may very suitably have a consistency at about 15 °C equal to or higher than table margarine or a consistency at about 15 °C equal to or less than frying fat.

A solid substance may be crystalline, amorphous or a paste. The particles of the fatty substance preferably contain the fatty substance in a crystalline phase.

A pan release agent concentrate according to the invention is usually a pourable composition or a solid composition. The consistency of a pan release agent concentrate according to the invention -as indicated by the Bostwick value (where applicable) - is generally less than about 20 cm per 30 sec. For a pourable concentrate, the Bostwick value is preferably at least about 1 cm per 30 sec. A value in the range of about 3-20 cm per 30 sec is very suitable for a pourable concentrate. In case of a concentrate with a high consistency , the Bostwick value is preferably less than 1 cm per 30 sec, more preferably 0-0.5 cm per 30 sec, even more preferably less than 0.1 cm per 30 sec. The Bostwick value is the distance which a sample of the concentrate flows under its own weight in 30 seconds at 20 °C, as determinable in a Bostwick consistometer.

It has been found very practical to provide a solid pan release agent concentrate in a shaped form, such as a block form. This is quite practical with respect to storage and transport of the concentrate.

Alternatively, the pan release agent concentrate may be a pourable concentrate, generally of a relatively high viscosity, when compared to a common fluid release agent. It has been found that a pourable concentrate is particularly attractive for its ease of use, for instance when preparing a fluid pan release agent from the concentrate.

A pan release agent concentrate according to the invention may be used directly (in particular in case the concentrate is pourable) or may very suitably serve as a concentrate for a "ready to use" (fluid) pan release agent, as will be described in detail below.

The inventors have realised that it is possible and in fact very interesting to prepare a pan release agent concentrate - in particular a concentrate in the form of a solid dispersion - which at a later stage (*e.g.* at a different manufacturing site) may be diluted to a final (fluid) release agent

An advantage of using such a concentrate includes the low cost regarding investment in mixing equipment for the manufacturer of the final release agent (no heaters/coolers required), ease of use (one can simply mix the concentrate (optionally including additives) purchased from the supplier of the concentrate with locally purchased oil), savings in transportation costs (due to the lower volume of the concentrate, compared to a final release agent and the fact that the oil can be purchased locally).

A pan release agent concentrate according to the invention allows a reduction in stock volume. In particular a concentrate may be usuable for preparing a variety of pan release agents, *e.g.* with different ingredients and/or different levels of ingredients, *e.g.* of hard glycerides. For this purpose only one type of pan release agent concentrate may be stored until it is mixed on demand to prepare a final pan release agent.

The pan release agent concentrate according to the invention in the form of a dispersion, may very suitably be prepared by mixing the solid fatty substance with a liquid oil thereby obtaining a dispersion of the oil and particles of the fatty substance. The mixing may very conveniently be carried out at a temperature above the melting temperature of the solid fatty substance (for instance 5-25 °C above the melting temperature), allowing the fatty substance to melt, and thereafter cooling the mixture below the crystallisation temperature of the fatty substance to allow crystallisation of the fatty substance. The crystallisation may for instance be carried out under kneading and working in a Votator while cooling to a temperature of about 20-32 °C. After crystallisation the mixture may be fluidised with (mild) stirring for about an hour or more, usually at a temperature of about 25-35 °C. The additional particulate component, may suitably be added after crystallisation and the fluidisation stage. The additional particulate component may suitably be added at ambient temperature (usually below 35 °C) while mixing, preferably for at least 30 min, more preferably for up to 4 hours. The skilled person will know how to choose suitable conditions depending upon the exact ingredients, using the information disclosed herein and common general knowledge.

In a concentrated pan release agent concentrate, and in particular in a solid pan release agent concentrate, the weight ratio of solid fatty substance to the liquid oil is usually more than 20:80. This in particular provides a satisfactory amount of particles of fatty substance, capable of stabilizing one or more other particulate materials which may be present or added later.

From a view point of savings in storage space and transportation costs, it is preferred that the ratio of solid fatty substance to liquid oil is at least about 25:75, more preferably at least about 30:70, even more preferably at least about 35:65.

For providing a solid dispersion, having a highly satisfactory shape stability (*e.g.* allowing piling a plurality of articles of the concentrate (such as blocks) on top of one another), it is preferred that the ratio is at least about 35:65, in particular if an additional particulate component is absent or present in a very low concentration (*e.g.* less than 1 % based on the total weight of the concentrate). It will be clear to the skilled person that a lower amount of fatty substance may be sufficient in case one or more additional particulate component are present. He will be able to adjust the ratio of the different components (oil : fatty substance : further additives) based upon common general knowledge and the information disclosed herein to obtain a suitable solid concentrate, if desired.

The weight ratio of solid fatty substance to the liquid oil in the pan release agent concentrate is preferably less than 70:30, in particular for providing an advantageous storage stability of the dispersed particles in the concentrate.

From a manufacturing point of view (easy mixing of fatty substance and oil in the preparation of the concentrate or in a dilution prior to use), a weight ratio of solid fatty substance to liquid oil is preferably less than about 50:50, more preferably less than about 45:55.

The size of the particles of the fatty substance, is not particularly critical. No special treatment is necessary to provide a suitable diameter. In practice, it is preferred that at least the majority of the particles has a diameter of at least about 1 µm and less than about 1000 µm. With respect to stabilising an additional component in the concentrate (or the fluid pan release agent) very good results have been obtained with an embodiment wherein at least the majority of the particles have a size of less than about 200 µm. An embodiment wherein at least the majority of the particles have a size of less than about 50 µm has been found very advantageous to provide a fluid release agent with particularly good spraying properties.

As a solid fatty substance for the fatty particles in principle any fatty substance, allowable in a food application, having a melting temperature above ambient conditions may be used. For practical reasons, the melting temperature is preferably at least about 50 °C, more preferably at least about 60 °C. This allows a good storage stability. The melting temperature as used herein is the melting temperature as determinable by "AOCS Official Method Cc 3b-92 Slip Melting Point".

Preferred solid fatty substances in an embodiment of the invention include solid fats of animal or vegetable origin, solid waxes, solid paraffins and solid sterols (in particular sitosterols).

Much preferred fats of animal or vegetable origin include triglycerides, such as triglyceride fats esterified with one or more acids having a chain length of about 4-24 carbon atoms.

Especially preferred are hardened triglycerides (including hardened triglyceride oils). An advantage of a hardened triglyceride is its suitability to provide a pan release agent concentrate with a desirable solid constitution, *e.g.* comparable to a margarine or fat for deep frying. Good results have further been achieved with low fat/no fat substances such as Olestra.

Triglycerides are considered hardened if at least a part of the acid chains are fully saturated. In particular hardened triglycerides preferably have a iodine value of less than about 10 (as determinable by "AOCS Recommended Practice Cd 1b-87,Iodine value of fats and oils Cyclohexane Method").

Very good results have been achieved with triglycerides having a iodine value of less than about 5, more in particular of less than about 1. Particles of such triglycerides in a concentrate according to the invention have been found to be particularly advantageous with respect to their function as stabilisers for an particulate additive.

A highly preferred of a hardened triglyceride of vegetable origin is hardened palm oil fat. Other preferred fats include hardened rapeseed oil, hardened sunflower seed oil, hardened soy bean oil, hardened fish oil, hardened maize oil, hardened peanut oil, hardened safflower oil, hardened olive oil, derivatives and mixtures thereof.

A wax has been found particularly suitable as a solid fatty substance in a pan release agent concentrate suitable for preparing a fluid pan release agent with very favourable spraying characteristics. Highly suitable waxes include waxes of plant or animal origin, in particular Carnauba wax, Jojoba wax, beeswax, sugar cane wax, bayberry wax and Candellilla wax. Particularly good results have been obtained with Carnauba wax.

As an oil any food grade oil may be used.

As an oil, a vegetable oil is preferred, in particular a glyceride oil, more in particular a triglyceride oil. The oil preferably has a iodine value of 20-210, more preferably of 80-140.

Preferred oils include sunflowerseed oil, soy bean oil, safflower oil, olive oil, peanut oil, rapeseed oil, maize oil, cotton oil, olein fractions of natural oil, in particular palm oil olein, interesterified oils and derivatives and mixtures thereof.

Good results have further been achieved with so called liquid medium-short chain triglycerides (MCT). MCT's usually comprise C8-C10 hydrocarbon chains, which chains are usually saturated. A pan release agent (concentrate) comprising one or more MCT's has been found to have a particularly good storage stability.

Preferred examples of edible oil mimetic components include low fat/no fat substances, such as fat replacing sugar esters, for instance Olestra™ or another low-fat frying medium.

Emulsifiers such as lecithin, sorbitan mono-fatty acid esters (such as sorbitan-oleate, sorbitan-laurate), polysorbate, diacetyl tartaric esters of fatty acid mono or diglycerides and sucrose esters of fatty acids may serve as oil mimetic component. When used as such, the emulsifier is preferably present in combination with a glyceride oil and/or a low fat/no fat substance.

Particularly good results have been achieved with lecithin. Although lecithin may be used as the oil when preparing a fluid pan release agent (as described below), lecithin is preferably included in a pan release agent concentrate. This has been found advantageous with respect to handling of the lecithin, which is considered cumbersome by end-users when preparing a relatively low volume fluid release agent. When present, the concentration of lecithin in the concentrate is preferably up to about 50wt.% based on the total weight of the pan release agent concentrate, in particular from about 5 up to about 50 wt. %.

In a pan release agent concentrate according to the invention, preferably one or more (food grade) additives are present in a particulate form. Such additives are usually poorly soluble (i.e. typically having a solubility in the oil and the fatty substance of less than 10 wt. % based upon the total weight, at ambient temperature; preferably of less than 5 wt. %) or even poorly dispersible in an oil. Thus in a known pan release agent most of the additive remains undissolved after addition and tends to sag very easily, leading to poor storage stability in a conventional release agent.

However, in combination with the particles of the fatty substance, in particular with a wax or hardened triglyceride, a very stable oil based dispersion has been found feasible, even after dilution of the (solid) pan release concentrate into an oil (thereby forming a fluid release agent). It has been found possible in accordance with the invention to provide a good storage stability, even in the absence of added emulsifiers to the additional particulate component(s). A concentrate is considered storage stable if it is still suitable for use after at least about 4 weeks about storage at ambient temperature (such as exist in a bakery). The stability may be improved by adding a dispersing agent such as a partially hardened fat or a fraction of an oil or fat such as a fraction of palm oil/

If desired, the additional particulate component(s) may comprise one or more emulsifiers (*e.g.* high melting esters of mono- and/or diglycerides, such as diacetyl tartaric esters of saturated mono- and/or diglycerides). Such emulsifier may be present in the additional particulate component in a concentration of about 0.1-40 wt. % based upon the weight of the additional particulate component, preferably in a concentration of less than 3 wt. %.

In general, the majority of the additive particles have a diameter (as determined by a Malvern Laser Particle Counter) of at least about 10 µm, preferably at least about 200 µm, up to about 1000 µm.

For a good stability (low sedimentation, in particular after mixing the concentrate, thereby forming a fluid release agent), preferably at least 50 % of the additive particles has a diameter of less than 700 µm.

Preferred examples of additive particles are selected from the group consisting of proteins, enzymes, starches, sugars (in particular lactose), salts of organic acids, salts of inorganic acids (*e.g.* NaCl, a carbonate) and foodstuffs, in particular one or more foodstuffs selected from milk powder, soy meal, soy extracts, soy concentrates, malts, yeasts, yeast extracts, whey powder and whey isolates.

Preferably particles of a pH-controlling agent are present in a pan release agent (concentrate) according to the invention. Preferred are organic acids - in particular citric acid or acetic acid - and inorganic acids, such as a hydrogen phosphate, in particular monocalcium phosphate.

In a particularly preferred embodiment of the invention, at least one enzyme is present. The presence of an enzyme in the pan release agent, has been found to contribute positively to the organoleptic properties and/or the visual appearance of bread prepared with the aid of the pan release agent.

Preferably an enzyme is used that is capable of contributing to the occurrence of a Maillard reaction (in particular between a protein/peptide and a sugar)) during the baking process. In particular such enzyme is preferably capable of degrading a protein and/or a polysaccharide, for instance a starch. Preferably, a protease, an amylase, an amyloglucosidase or a combination of these enzymes is present in a pan release agent according to the invention. The protease allows degradation of proteins into peptides which then may react with a sugar (such as glucose, a maltodextrin, lactose, saccharose). Further it has been found that a protease has a positive influence on the colour and/flavour of a baked product, prepared with a pan release agent according to the invention, comprising a protease.

The amylase and the amyloglucosidase catalyse the breakdown of starch molecules, to provide a sugar for reaction with the protein/peptide.

Other examples of additive particles include bread improvers such as emulsifiers, hydrocolloids, flavours, reductants, minerals, vitamins, sweeteners, baking powders, flour, colouring, spices, herbs, gluten, preservatives, antioxidants and fibres.

Very good results have been achieved with a concentrate wherein one or more enzymes are present in particulate form. In particular, the use of a releasing agent (concentrate) comprising one or more enzymes selected from proteases, amylases and amyloglucosidases, in the baking of bread has been found to have a flavour enhancing effect. Further, it has been found that a baked product, baked after spraying or brushing of the surface of a shaped dough with a release agent according to the invention, has a visually highly attractive appearance, in particular with respect to colour and surface roughness.

Additives such as sugars, foodstuffs and/or other products that can perform a Maillard reaction may be added for imparting a natural flavour effect.

Preferably, an effective amount of an antimicrobial agent is present in the pan release agent concentrate or the fluid pan release agent. Very good results have been achieved with a pan release agent comprising one or more antimicrobial agents selected from the group consisting of acetic acid, citric acid, sorbic acid, benzoic acid, salts of any of these acids and esters of any of these esters.

Preferably an effective amount of an antioxidant is present, for instance propyl gallate, TBHQ, BHT, BHA or a combination thereof

The skilled person will know to determine suitable amounts for any of the additives, based upon common general knowledge and the information disclosed herein and the intended use depending on the function and the type of additive. Enzymes are examples where typically relatively low levels are used and starches are examples where typically relatively high levels are used. The total amount of additives in particulate form (i.e. not including the particles of the fatty substance) is preferably at least 0.1 wt. %, based on the total weight of the concentrate, more preferably at least 0.5 wt. %. For practical reasons, the total amount of the additives in particulate form is preferably less than about 15 wt.% based on the total weight of the concentrate.

A concentrated pan release agent concentrate according to the invention may be directly used in the manufacture of a baked product or may be used to prepare a fluid pan release agent (see also above).

The preparation of a fluid release agent, preferably comprises mixing the pan release agent concentrate (comprising the solid fatty substance), with a liquid oil in an effective ratio to provide the fluid release agent, plus optionally additives, at a temperature below the melting point of the fatty substance.

Alternatively, one may prepare the fluid release agent by mixing the oil and a relatively low amount of fatty substance in one step at a temperature below the melting point of the fatty substance. The concentration of fatty substance then typically does not exceed 20 % based on the combined weight of fatty substance and oil.

By mixing of solid fatty substance and oil at a temperature below the melting temperature of the solid fatty substance, it has been possible to prepare a fluid oil based pan release agent in an energetically efficient way.

In addition, it has been found that preparing a pan release agent in accordance with the invention has a positive effect on the quality of the pan release agent, in particular with respect to its storage stability. It is thought that this is due to the relatively low temperature at which the preparation is typically carried out. After all, the oil (which may be heat sensitive), which is mixed with the pan release agent concentrate or the fatty substance does not have to be heated or is only heated to a point below the melting point of the fatty substance.

Further, a method for preparing a fluid pan release agent according to the invention can be carried out using very simple equipment. In principle, a conventional mixer suffices. No cooling and/or heating apparatus are required. Of course, one may use such equipment, to (moderately) heat or cool, if one so desires. The heater may for instance be used to heat the oil during the preparation of the fluid release agent to a temperature between ambient and the melting temperature of the solid fatty substance, preferably to a temperature of more than 10 °C below the melting temperature of the solid fatty substance. More preferably the mixing is carried out at a temperature of at least about 20 °C below the melting temperature of the solid fatty substance.

Very good results have been achieved with a method for preparing the fluid release agent, wherein the mixing takes place at a temperature of less than about 40°C, in particular at a temperature of less than about 30 °C. For practical reasons, the mixing temperature should generally be higher than the melting temperature of the oil, preferably at least about 15 °C, more preferably at least ambient room temperature.

The oil is preferably a vegetable oil such as specified above for a suitable oil in the oil phase of the (solid) oil based releasing agent concentrate, in particular a vegetable triglyceride oil, more in particular soy oil, sunflower oil or another of the above mentioned preferred vegetable oils, including mixtures thereof.

The amount of oil used, is preferably such that the weight ratio of oil (including the oil of the solid pan release agent concentrate) to fatty substance particles in the fluid release agent is about 99.5:0.5 to about 80:20, more preferably about 99:1 to about 90:10, even more preferably about 97:3 to about 95:5.

The amount of particulate additives in the fluid pan release agents is usually at least about 0.1 wt. % based on the total weight, preferably between 0.5 and 60 wt.% based on the total weight more preferably between 1 and 30 wt. %, more preferably between 3 and 20 wt. %. Such concentration may be achieved by adding (additional) additive particles to the oil, prior to, during or after mixing the oil and the pan release agent concentrate.

The invention further relates to a fluid pan release agent, obtainable by a method according to the invention. It has been found that such an agent is characterised by a particularly good storage stability. Further it has been found that the amount of oxidised oil components is relatively low. More in particular, the invention further relates to a pan release agent comprising a liquid oil and dispersed therein particles of a solid fatty substance and particles of at least one enzyme, such as described herein.

The invention further relates to a method for baking a dough based product, such as bread or pastry, comprising applying a concentrated pan release agent concentrate or fluid release agent according to the invention to an outer region (such as the surface) of the dough and/or to the contacting area of the dough and the baking device (such as a pan) wherein or whereon the dough is held during baking. The fluid pan release agent may very suitably be applied by spraying or brushing.

The skilled person will be able to choose suitable baking conditions based on the information disclosed herein and common general knowledge, in particular with respect to the dough formulation, the baking time and the baking temperature.

The invention is further illustrated by the following examples.

### Example 1 Lab Production method of pan release agent concentrate (Hard Stock)

### Equipment:

Hobart type 506
Laboratory stirrer IKA Type RW 16 basic

### Hardstock I

Solid fatty substance: Fully hardened palm oil (melting point approx. 58 °C): 100 grams
Oil: Sunflower oil: 300 grams

### Hardstock II

Solid fatty substance: Carnauba wax 80 grams
Oil: Sunflower oil 320 grams

### Method of preparation

Firstly the high melting solid fatty substance is dissolved in heated sunflower oil. The hardened palm oil is added at an oil temperature of approximately 60 °C; the Carnauba wax at approximately 90°C. This is done by heating the mixtures in a beaker whilst stirring

When the solution is clear and no particles are visible the mixture is poured in the Hobart that is equipped with a paddle normally used for instance shortbread dough's . The Hobart is stirred with speed 2 till the mixture is at least cooled down to room temperature.

The homogeneous mixture is than transferred in a glass beaker. The material is than stirred for at least 2 and preferably more hours so that the mixture is more smooth looking.

The hardstock is now ready for the tests of the release agents with different levels of hardstock and/or different levels of non fatty particulates.

### Example 2

A fluid pan release agent was prepared by mixing the pan release agent concentrate (Hard Stock; consisting of 35 wt. % of hardened Palm oil (iodine value approx. 1) and 65 wt. % sunflower oil), Lecithin and sunflower oil for 2 minutes with a household blender. The enzymes were added thereafter and mixing was continued until dispersed.

The composition of the final fluid pan release agent was as follows:

| | |
|---|---|
| 82.5wt.% | Sunflower oil |
| 10.0wt.% | Hard stock |
| 4.0wt. % | Lecithin (Emulfluid NGM) |
| 2.0wt. % | Capzyme AG 600 ex IFT (Amyloglucosidase) |
| 0.5 wt. % | Bakezyme P500 G ex DSM (Amylase) |
| 1.0 wt.% | Flavourzym 500 ex Novozymes (Proteases) |

### Baking of Q.C. White pan bread

### Recipe:

| | |
|---|---|
| Flour Kluut/Kolibrie 50/50 | 1200 g |
| Water | 720 g |
| Yeast (compressed) | 42 g |
| Salt | 24 g |
| Sugar | 12 g |
| Ascorbic Acid | 0.06 g |
| FAA 5000 SKB u/g | 0.24 g |
| Capzyme 500 | 0.48 g |

### Processing:

Mixing: 4 min slow and 5 min (1:20, 1:20, 1:50) high speed in spiral mixer
Dough temperature: 26 °C
First proofing time: 10 min. at room temperature
Dough weight: 480 g
To round up by hand
Proofing time: 20 min; 10 min in proofing cabinet and 10 min. at room temperature.
Moulding: with the "mono"walls; 4 pressure belt; 7.5 conductors; 9
Final proofing time: 60-70 min. at 32 °C and 80 % RH
Baking: 25 min at Top/Bottom 230 °C/260 °C

### Organoleptic assessment

Bread was assessed by an expert panel (4 members) Only the consensus is reported.

The White pan breads were baked in an electrically heated oven. A comparison was made between a bread baked in a pan with the standard release agent against the same bread baked in a pan that was spiked with the enzyme mixture. The pans were greased before the dough was deposited in the pan so that the enzyme mixture was in contact with the dough throughout the baking cycle. In both cases around 0.8 grams of release agent was used and approx. 475 grams of dough was deposited in each tin. The tins were closed with a lid so as to make casino bread

### Smell in the oven

The breads with and without the enzyme spiked release agents were baked in two different oven floors. All panel members noticed a stronger nice smell coming from the bread with the enzyme treated release agent than from the standard.

### Visual inspection of crust

The baked breads were inspected for the crust quality.

The standard breads had a light brown and very smooth surface.

The breads baked with the enzyme mix containing release agent were more golden brown, opener crust texture, more aroma straight after the oven and appeared to be more authentic and traditional

### Texture of crumb

The crumb was assessed one and two days after the baking and no difference in crumb texture was observed.

## Claims

1. Solid oil-based pan release agent concentrate, comprising a liquid oil and dispersed therein particles of a solid fatty substance and optionally particles of at least one additional food-grade component.

2. Pan release agent concentrate, optionally according to claim 1, wherein the weight ratio of the particles of the fatty substance to the liquid oil is in the range of about 20:80 to about 70:30, preferably about 30:70 to about 50:50.

3. Pan release agent concentrate according to claim 1 or 2, wherein the particles of the fatty substance are formed of at least one fatty substance selected from the group consisting of fats of animal or vegetable origin, waxes, paraffins and sterols.

4. Pan release agent concentrate according to any one of the preceding claims, wherein the fatty substance comprises a hardened triglyceride of vegetable origin, such as a hardened palm oil fat, having a iodine value of less than 10, preferably of less than 1

5. Pan release agent concentrate according to any one of the preceding claims, wherein the fatty substance comprises a wax, preferably Carnauba wax.

6. Pan release agent concentrate according to any one of the preceding claims, wherein the oil phase is formed of at least one compound selected from vegetable oils and animal oils, preferably triglyceride vegetable oils.

7. Pan release agent concentrate according to any one of the preceding claims, wherein the additional component is selected from the group consisting of proteins, enzymes (in particular proteases, amylases, amyloglucosidases), starches, sugars (in particular lactose), salts of organic acids, salts of inorganic acids and foodstuffs (in particular milk powder, soy meal, soy extracts, soy concentrates, malts, yeasts, yeast extracts, whey powder, whey isolates).

8. Pan release agent concentrate according to any one of the preceding claims, wherein the total amount of oil phase and fatty particles is in the range of 40 to 99.5 wt. % based on the total weight of the concentrate and the total amount of additional components in particulate form is in the range of 0.5 to 60 wt %, based on the total weight of the concentrate.

9. Pan release agent concentrate according to any of the preceding claims in the shape of a block.

10. Method for preparing an oil-based pan release agent concentrate according to any one of the preceding claims, comprising mixing a solid fatty substance with a liquid oil, forming a dispersion of particles of the fatty substance in the oil, and optionally mixing the additional particulate component with the dispersion.

11. Method for preparing a fluid pan release agent, comprising mixing the pan release agent concentrate according to any one of claims 1-9 with a liquid oil, preferably a vegetable oil, in an effective ratio to provide the fluid release agent.

12. Method according to claim 11, wherein the mixing takes place at a temperature below the melting point of the fatty substance, preferably below 35 °C.

13. Method according to claim 12, wherein the temperature during mixing is at least ambient temperature.

14. Method according to any one of the claims 11-13, wherein the amount of oil used is such that the weight ratio of oil (including the oil of the release agent concentrate) to solid fatty substance in the fluid release agent is about 99.5 : 0.5 to about 80:20, preferably about 99:1 to about 95:5.

15. Method according to any one of the claims 11-14, wherein the pan release agent concentrate is transported from its manufacturing site to a different site at which the mixing of the pan release agent concentrate with the oil takes place.

16. Fluid oil based pan release agent, obtainable by a method according any one of the claims 11 to 15.

17. Method for baking a dough based product, such as bread or pastry, comprising adding a pan release agent concentrate or fluid pan release agent as defined in any one of the preceding claims to the dough and/or to the contacting area of the dough and the baking device used for baking the product.

18. Method according to claim 17, wherein the fluid pan release agent is sprayed and/or brushed on the pan and/or the dough.

19. Method according to claim 17 or 18, wherein the fluid pan release agent comprises one or more enzymes, preferably one or more enzymes selected from the group consisting of proteases, amylases and amyloglucosidases.

20. Baked product, in particular a bread, obtainable by a method according to any one of the claims 17-19.

21. Use of an oil based dispersion, comprising a liquid oil and dispersed therein particles of a solid fatty substance and particles of at least one enzyme as a pan release agent.

22. Use according to claim 21, wherein the dispersion is a pan release agent concentrate as defined in any one of the claims 1-9 or a pan release agent according to claim 16.
